# EUROPÄISCHE PATENTSCHRIFT

(11) **EP 1 723 479 B1**
(45) Veröffentlichungstag und Bekanntmachung des Hinweises auf die Patenterteilung: **05.09.2007**
(21) Anmeldenummer: 06706540.9
(22) Anmeldetag: 01.02.2006
(51) Int. Cl.: G05D 7/01

(54) **DURCHFLUSSMENGENREGLER**
FLOW REGULATOR
REGULATEUR DE DEBIT

(30) Priorität: 14.03.2005 DE 202005004195 U
(43) Veröffentlichungstag der Anmeldung: 22.11.2006
(73) Patentinhaber: Neoperl GmbH, 79379 Müllheim (DE)
(72) Erfinder: HART, Keith, Welland Worcestershire WR13 6NE (GB); ZOLLER, Uwe, 79424 Auggen (DE); WEIS, Christoph, 79379 Müllheim (DE)
(74) Vertreter: Maucher, Wolfgang
(86) Internationale Anmeldenummer: PCT/EP2006/000854
(87) Internationale Veröffentlichungsnummer: WO 2006/094581

(56) Entgegenhaltungen:
- EP-A- 1 600 839
- DE-C1- 10 228 490
- US-A- 4 867 198
- US-A1- 2004 079 418

## Beschreibung

Die Erfindung betrifft einen Durchflussmengenregler mit einem Reglergehäuse, das in einem Durchtrittskanal einen Zentralkörper aufweist, den ein ringförmiger Drosselkörper aus elastischem Material umgreift, welcher Drosselkörper zwischen sich und einer benachbarten, mit in Umfangsrichtung voneinander beabstandeten und in Durchflussrichtung orientierten Regulierausnehmungen versehenen Umfangsmantelfläche einen Steuerspalt begrenzt, dessen Durchtrittsquerschnitt durch den sich unter der beim Durchströmen bildenden Druckdifferenz verformenden Drosselkörper veränderbar ist.

Durchflussmengenregler der eingangs erwähnten Art sind bereits in unterschiedlichen Ausführungen bekannt, siehe z.B. EP-A-1 600 839. Mit Hilfe solcher Durchflussmengenregler kann die maximale Durchflussleistung pro Zeiteinheit an einer sanitären Verbrauchsstelle.unabhängig vom Wasserdruck des zuströmenden Wassers vergleichmäßigt werden. In manchen Einsatzbereichen wäre es jedoch wünschenswert, die maximale Durchflussleistung verändern zu können, um beispielsweise bei Gaswandheizungen die Durchflussmenge des zur Erhitzung bestimmten Wassers an die im Sommer und im Winter unterschiedlichen Vorlauftemperaturen des Wassers anpassen zu können. Eine solche Veränderung oder Anpassung der Durchflussmenge ist bislang meist nur durch Auswechseln des Durchflussmengenreglers und Austausch gegen einen anderen Mengenregler mit einer demgegenüber anderen Durchflussleistung möglich. Der mit dem Austausch eines solchen Durchflussmengenreglers verbundene Aufwand kann jedoch vergleichsweise hoch sein.

Es besteht daher insbesondere die Aufgabe, einen Durchflussmengenregler der eingangs erwähnten Art zu schaffen, der eine Veränderung der maximalen Durchflussleistung und/oder des vorgesehenen Druckbereiches erlaubt und der dennoch vergleichsweise einfach in seiner Herstellung und Konstruktion ist.

Die erfindungsgemäße Lösung dieser Aufgabe besteht bei dem Durchflussmengenregler der eingangs erwähnten Art insbesondere darin, dass der lichte Durchflussquerschnitt des Steuerspalts durch eine Änderung der Relativposition von Drosselkörper und Umfangsmantelfläche veränderbar ist, dass die Relativposition von Drosselkörper und Umfangsmantelfläche in Abhängigkeit von der Durchflussrichtung des durch den Durchtrittskanal durchströmenden Fluids festlegbar ist und dass der Zentralkörper als ein die Regulierausnehmungen aufweisender Steuerzapfen, Steuerkegel oder dergleichen Steuerkörper ausgestaltet ist, der zumindest zwei Teil-Abschnitte mit voneinander abweichenden Kegel-, Zapfen- oder dergleichen Steuerkörper-Querschnitten und/oder Regulierausnehmungen zur Änderung zwischen wenigstens zwei Durchflussleistungen und/oder mindestens zwei Druckbereichen aufweist.

Bei dem erfindungsgemäßen Durchflussmengenregler ist der vom ringförmigen Drosselkörper umgriffene Zentralkörper als Steuerzapfen, Steuerkegel oder dergleichen Steuerkörper ausgestaltet, der die in Durchflussrichtung orientierten Regulierausnehmungen trägt. Dieser zentrale Steuerkörper weist zumindest zwei Teilabschnitte auf, die wenigstens zwei Durchflussleistungen und/oder mindestens zwei Druckbereichen zugeordnet sind und die sich durch voneinander abweichende Kegel-, Zapfen- oder dergleichen Steuerkörper-Querschnitte und/oder Regulierausnehmungen unterscheiden. Durch eine Veränderung der Relativposition von Drosselkörper und Umfangsmantelfläche wird der Drosselkörper wahlweise entweder dem einen oder dem anderen Teilabschnitt des Steuerzapfens, Steuerkegels oder dergleichen Steuerkörpers zugeordnet, der dem benötigten Soll-Wert der Durchflussleistung oder dem gewünschten Druckbereich entspricht. Dabei ist die Relativposition von Drosselkörper und Umfangsmantelfläche in Abhängigkeit von der Durchflussrichtung des durch den Durchtrittskanal durchströmenden Fluids vorwählbar und festlegbar. Durch eine bloße Umkehr der Durchflussrichtung des Fluids im Durchflussmengenregler lässt sich dieser von der einen Regelcharakteristik in eine andere Regelcharakteristik umstellen.

Der erfindungsgemäße Durchflussmengenregler kann beispielsweise in Gaswandheizungen vorteilhaft eingesetzt werden, in denen eine Durchflussmenge des zur Erhitzung bestimmten Wassers an die im Sommer und im Winter unterschiedlichen Vorlauftemperaturen des Wassers anzupassen ist.

Um die Relativposition von Drosselkörper und der am Steuerzapfen, Steuerkegel oder dergleichen Steuerkörper vorgesehenen Umfangsmantelfläche zu verändern, ist es zweckmäßig, wenn der Drosselkörper und/oder der Zentralkörper im Reglergehäuse bewegbar ist.

Der Drosselkörper lässt sich besonders gut den für bestimmte Durchflussleistungen oder Druckbereiche vorgesehenen Teilabschnitten des Steuerzapfens, Steuerkegels oder dergleichen Steuerkörpers zuordnen, wenn der Drosselkörper und/oder der Zentralkörper in Abhängigkeit von der Durchflussrichtung zwischen zwei Drossel- bzw. Zentralkörperanschlägen bewegbar ist. Bei dieser Ausführungsform wird der Drosselkörper und/oder der Zentralkörper je nach Durchströmrichtung des durch den Durchflussmengenregler durchströmenden Fluids entweder gegen den einen oder gegen den anderen Drossel- beziehungsweise Zentralkörperanschlag gedrückt, der durch seine Zuordnung von Drosselkörper und Steuerzapfen-, Steuerkegel- oder Steuerkörper-Teilabschnitt einer bestimmten Durchflussleistung entspricht.

Eine besonders vorteilhafte und funktionssichere Ausführungsform gemäß der Erfindung sieht vor, dass im Gehäuseinneren des Reglergehäuses ein Führungszapfen vorgesehen ist, auf dem der Zentralkörper mittels einer Führungsöffnung verschieblich geführt ist.

Besonders vorteilhaft ist es, wenn der Zentralkörper als ein sich vorzugsweise gleichmäßig verjüngender Steuerkegel ausgestaltet ist. Bei dieser Ausführungsform kann der Drosselkörper in nahezu jeder Relativposition mit dem Steuerkegel zusammenwirken, wobei auch eine Vielzahl unterschiedlicher Durchflussleistungen möglich sind, wenn der Drosselkörper im Gehäuseinneren bewegbar und festlegbar gehalten ist.

Sofern der Steuerzapfen, Steuerkegel oder dergleichen Steuerkörper im Gehäuseinneren bewegbar ist, ist es vorteilhaft, wenn der Drosselkörper am Gehäuseinnenumfang des Reglergehäuses in einer Nut oder dergleichen Drosselkörper-Aufnahme in Durchflussrichtung im wesentlichen unverrückbar gehalten ist.

Um die Fließrichtung im Gehäuseinneren des erfindungsgemäßen Durchflussmengenreglers zu verändern, und um den Drosselkörper bzw. den Steuerzapfen, Steuerkegel oder dergleichen Steuerkörper in die einer bestimmten Durchflussleistung zugeordnete Relativposition bringen zu können, sieht eine Weiterbildung gemäß der Erfindung vor, dass der Durchflussmengenregler in einem, in die Fluidleitung zwischengeschalteten Wendeteil vorgesehen ist, und dass das Wendeteil zum Ändern der Durchströmrichtung im Durchflussmengenregler bei ansonsten gleichbleibender Durchflussrichtung in den benachbarten Leitungsabschnitten der Fluidleitung drehbar in der Fluidleitung gelagert ist.

Weitere Merkmale der Erfindung ergeben sich aus der folgender Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:

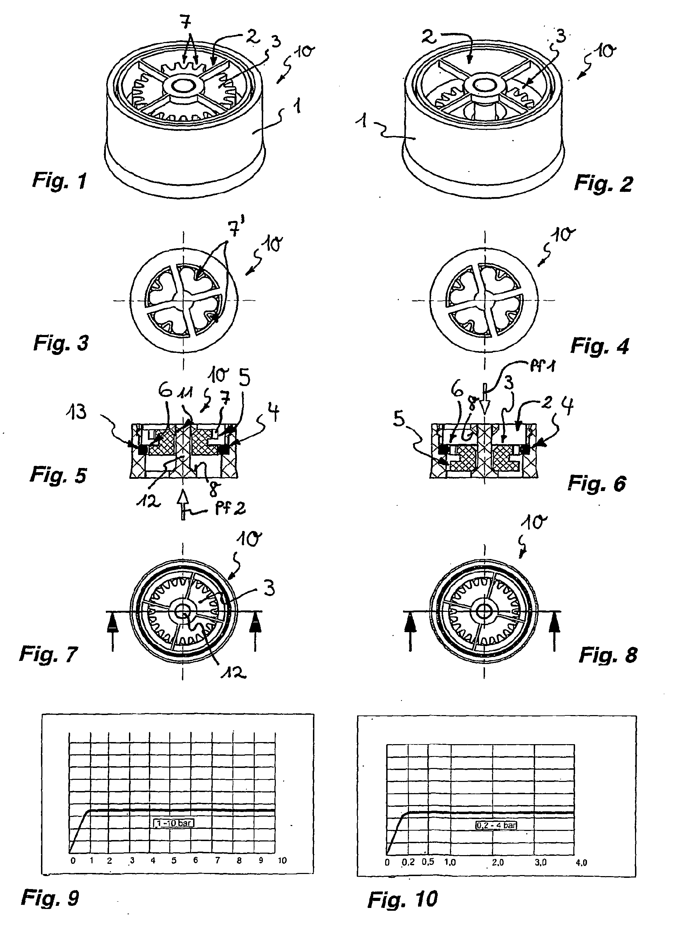

- Fig. 1 bis 10: einen Durchflussmengenregler, dessen Steuerzapfen oder dergleichen Steuerkörper zur Veränderung des vorgesehenen Regel- oder Druckbereiches im Gehäuseinneren des Reglergehäuses derart verschieblich geführt ist, dass wahlweise einer von zwei, sich zwar nicht in ihrer Durchflussleistung, aber in ihrem Druckbereich voneinander unterscheidenden Teilabschnitte des Steuerkörpers mit dem ihn umgreifenden Drosselkörper zusammenwirkt, wobei der Durchflussmengenregler in einer Perspektivansicht (Fig. 1 und 2), in einer Draufsicht auf die eine Gehäuse-Stirnseite (Fig. 3 und 4), in einem Längsschnitt (Fig. 5 und 6), in einer Draufsicht auf die andere Gehäusestirnseite (Fig. 7 und 8) und in den die unterschiedlichen Druckbereiche ausweisenden Leistungskurven seiner beiden Funktionsstellungen gemäß den Figuren 1, 3, 5 und 7 einerseits und den Figuren 2, 4, 6 und 8 andererseits gezeigt ist,

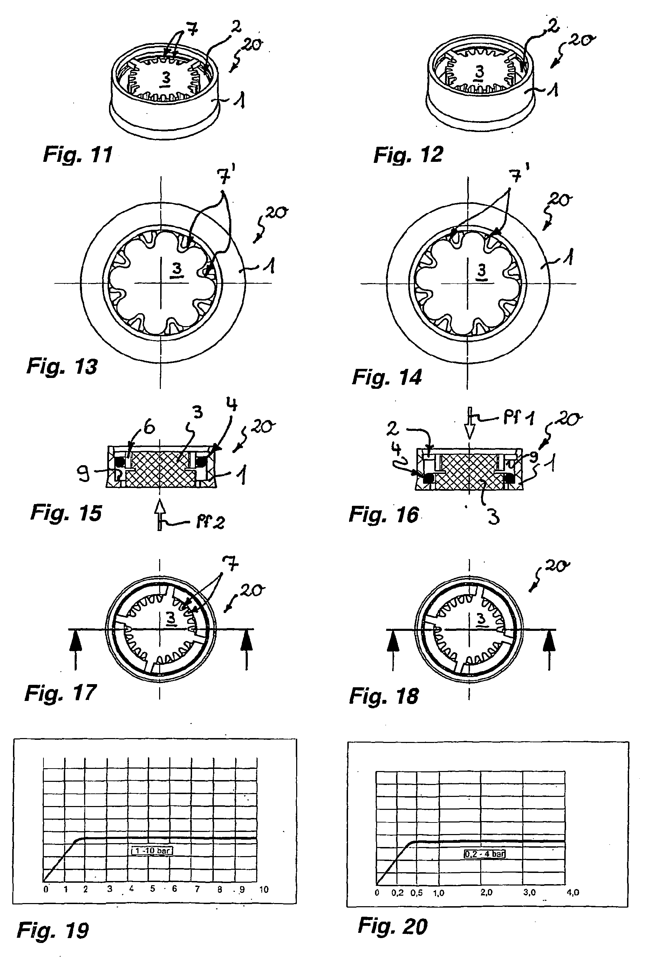

- Fig. 11 bis 20: einen Durchflussmengenregler in mit Figur 1 bis 8 vergleichbaren Ansichten, wobei hier der Drosselkörper in Abhängigkeit von der Strömungsrichtung im Durchflussmengenregler zwischen zwei Funktionsstellungen bewegbar ist, die bei nominell gleicher Literleistung pro Zeiteinheit wahlweise eine Niederdruckoder Hochdruckanwendung dieses Durchflussmengenreglers erlauben,

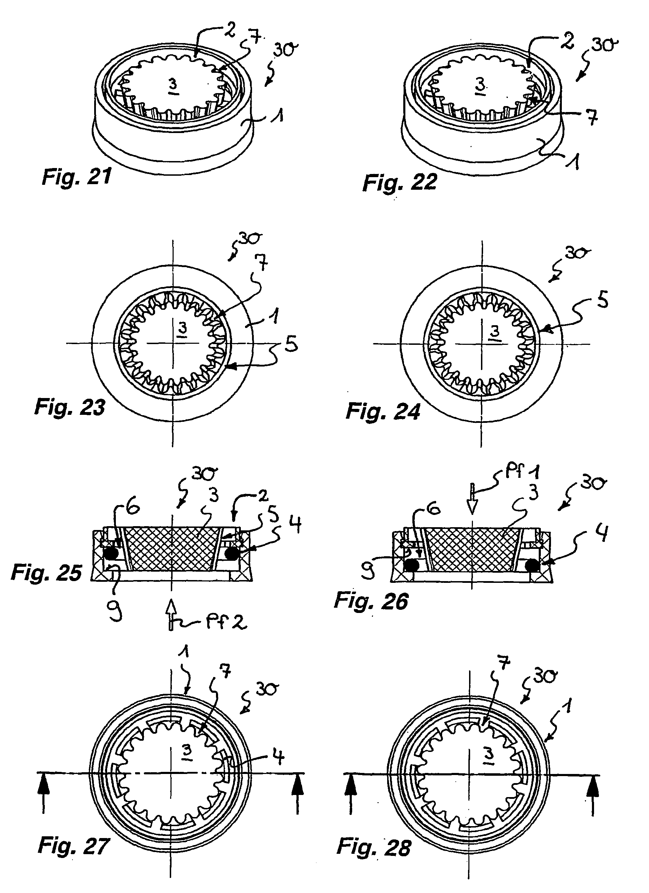

- Fig. 21 bis 28: einen Durchflussmengenregler mit einem zwischen zwei Drosselkörper-Anschlägen bewegbaren Drosselkörper in mit den Figuren 1 bis 8 bzw. 11 bis 18 vergleichbaren Ansichten, wobei der zentrale Steuerkörper hier als Steuerkegel ausgestaltet ist, und wobei der hier dargestellte Durchflussmengenregler sich durch unterschiedliche Literleistungen pro Zeiteinheit in seinen verschiedenen Funktionsstellungen auszeichnet,

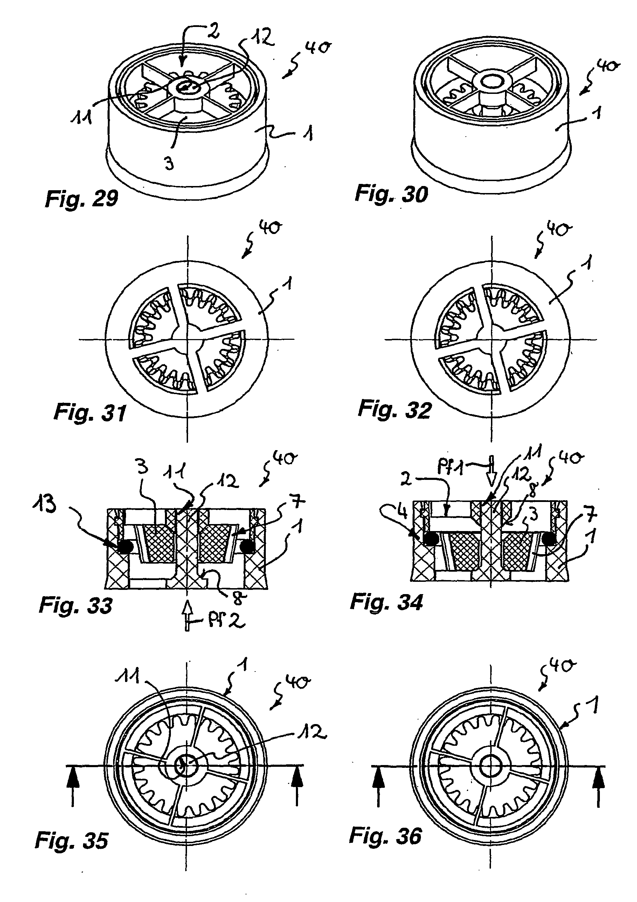

- Fig. 29 bis 36: einen Durchflussmengenregler, dessen als Steuerkegel ausgestalteter Steuerkörper gegenüber einem in Durchströmrichtung unverrückbar gehaltenen Drosselkörper zwischen zwei Steuerkegel-Anschlägen bewegbar ist, und

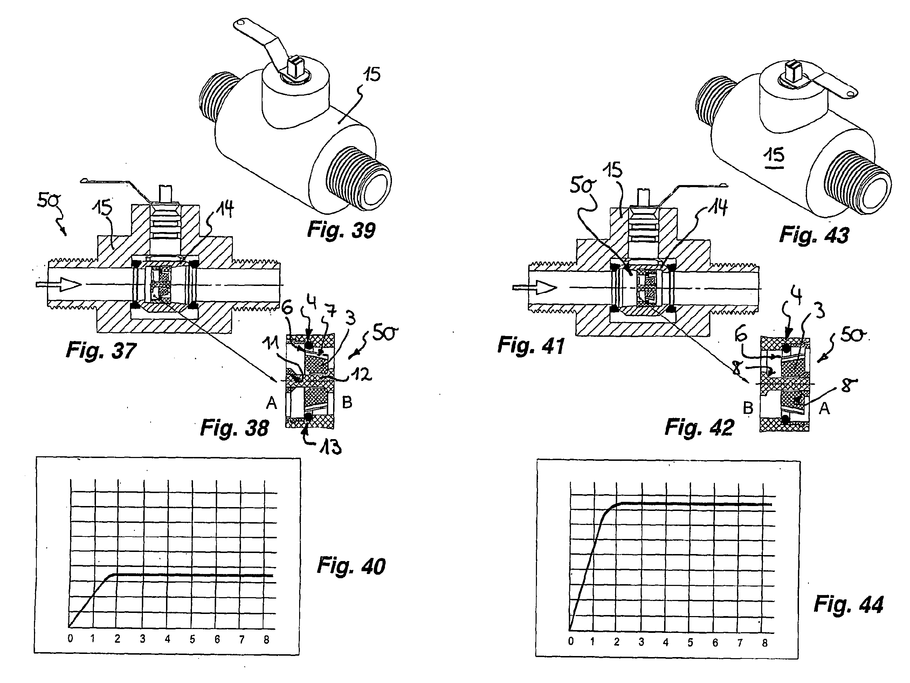

- Fig. 37 bis 44: einen Durchflussmengenregler mit einem zwischen zwei Funktionsstellungen bewegbaren Steuerkegel, der in einem Wendeteil eines in die Fluidleitung zwischengeschalteten Leitungsadapters drehbar gehalten ist, wobei der Durchflussmengenregler in einem Längsschnitt (Fig. 38 und 42), auch durch den Leitungsadapter (Fig. 37 und 41), in einer perspektivischen Ansicht auf den Leitungsadapter (Fig. 39 und 43) sowie in den, seinen verschiedenen Funktionsstellungen entsprechenden Leistungskurven (Fig. 40 und 44) dargestellt ist.

Die Figuren 1 bis 44 zeigen fünf verschiedene Ausführungen 10, 20, 30, 40 und 50 eines Durchflussmengenreglers, der in eine Fluidleitung, insbesondere in eine sanitäre Wasserleitung, zwischengeschaltet werden kann, um die pro Zeiteinheit durchströmende Wassermenge unabhängig vom Wasserdruck auf einen bestimmten Maximalwert anzupassen. Die Durchflussmengenregler 10, 20, 30, 40, 50 weisen ein Reglergehäuse 1 auf, das in einem Durchtrittskanal 2 einen Zentralkörper 3 hat. Der Zentralkörper 3 wird von einem ringförmigen Drosselkörper 4 aus elastischem Material umgriffen, der zwischen sich und einer benachbarten Umfangsmantelfläche 5 einen Steuerspalt 6 begrenzt.

Der Durchtrittsquerschnitt des Steuerspalts 6 ist durch einen sich unter der beim Durchströmen des Fluids bildenden Druckdifferenz verformenden Drosselkörper 4 veränderbar. Dabei sind an der Umfangsmantelfläche 5 in Umfangsrichtung voneinander beabstandete und in Durchflussrichtung orientierte Regulierausnehmungen 7, 7' vorgesehen, in welche sich der Drosselkörper 4 bei erhöhtem Druck des Fluids einformen kann.

Bei den Durchflussmengenregler 10, 20, 30, 40, 50 ist der lichte Durchflussquerschnitt des Steuerspalts 6 auf unterschiedliche Weise durch eine Änderung der Relativposition von Drosselkörper 4 und Umfangsmantelfläche 5 zwischen zumindest zwei Durchflussleistungen und/oder mindestens zwei Druckbereichen veränderbar. Dabei ist die Relativposition zwischen dem Drosselkörper 4 und Umfangsmantelfläche 5 in Abhängigkeit von der Durchflussrichtung Pf1, Pf2 des durch den Durchtrittskanal 2 durchströmenden Fluids vorwählbar und festlegbar.

Der Zentralkörper 3 der hier dargestellten Durchflussmengenregler 10, 20, 30, 40, 50 ist dazu als ein, die Regulierausnehmungen 7, 7' aufweisender Steuerzapfen, Steuerkegel oder dergleichen Steuerkörper ausgestaltet, der zumindest zwei Teilabschnitte mit voneinander abweichenden Kegel-, Zapfen- oder Steuerkörper-Querschnitten und/oder Regulierausnehmungen 7, 7' aufweist.

Um die Relativposition zwischen dem Drosselkörper 4 und der am Steuerzapfen, Steuerkegel oder dergleichen Steuerkörper vorgesehenen Umfangsmantelfläche 5 zu verändern, ist der Steuerkegel, Steuerzapfen oder dergleichen Steuerkörper 3 der Durchflußmengenregler 10, 40 und 50 im Reglergehäuse 1 bewegbar. Demgegenüber weisen die Durchflussmengenregler 20 und 30 einen in Durchflussrichtung unverrückbar gehaltenen Steuerkörper 3 auf, der von einem im Reglergehäuse 1 beweglichen Drosselkörper 4 umgriffen ist.

Dabei sind die beweglichen Drossel- bzw. Steuerkörper 3, 4 in Abhängigkeit von der Durchflußrichtung Pf1, Pf2 im Durchflussmengenregler 10, 20, 30, 40, 50 zwischen zwei Zentralkörperanschlägen 8 bzw. Drosselkörperanschlägen 9 bewegbar.

Der Steuerkörper 3 der Durchflußmengenregler 10, 40 und 50 weist eine Führungsöffnung 11 auf, mittels welcher der Steuerkörper 3 entlang eines im Gehäuseinneren des Reglergehäuses 1 befindlichen Führungszapfens 12 verschieblich geführt ist. Bei diesen Durchflussmengenreglern 10, 40 und 50 ist der Drosselkörper 4 am Gehäuseinnenumfang des Reglergehäuses 1 in einer Nut 13 oder dergleichen Drosselkörper-Aufnahme in Durchflussrichtung im wesentlichen unverrückbar gehalten.

Während die Durchflussmengenregler 10 und 20, die sich in Form und Größe ihrer Regulierausnehmungen unterscheiden, einen Steuerkörper 3 aufweisen, der zwei, in ihrer Durchflussleistung oder im vorgesehenen Druckbereich unterschiedliche Teilabschnitte hat, ist der Steuerkörper der Durchflussmengenregler 30, 40 und 50 kegelförmig ausgestaltet, so dass der Drosselkörper 4 hier in nahezu jeder Relativposition mit dem Steuerkegel 3 zusammenwirken kann, um zumindest zwei unterschiedliche Durchflussleistungen oder Druckbereiche zu ermöglichen.

Die Figuren 9 und 10 bzw. 19 und 20 zeigen die Leistungskurven der Durchflussmengenregler 10, 20 jeweils in den beiden Funktionsstellungen. Wie aus einem Vergleich der Figuren zu entnehmen ist, können die Durchflussmengenregler 10, 20 je nach Eingriffsstellung des Drosselkörpers 4 im Vergleich zur korrespondierenden Umfangsmantelfläche 5 wahlweise für eine Niederdruckanwendung oder für eine Hochdruckanwendung bei jeweils gleichem nominalen Durchfluss verwendet werden. Während bei dem Durchflussmengenregler 10 der Steuerkörper 3 mit seiner Umfangsmantelfläche 5 in eine andere Vorzugslage und somit in eine andere Funktionsstellung gebracht werden kann, verursacht eine Umkehr der Strömungsrichtung Pf1, Pf2 im Durchflussmengenregler 20 eine Änderung der Funktionsstellung des Drosselkörpers 3.

Die hier dargestellten Durchflussmengenregler 10, 20, 30, 40, 50 sind beispielsweise in Gaswandheizungen vorteilhaft einsetzbar, in denen die Durchflussmenge des zur Erhitzung bestimmten Wassers an die im Sommer und im Winter unterschiedlichen Vorlauftemperaturen des Wassers anzupassen ist.

Um die Fließrichtung im Gehäuseinneren des Durchflussmengenreglers 50 zu verändern, und um den Steuerkegel 3 in die einer bestimmten Durchflussleistung zugeordnete Relativposition zum Drosselkörper 4 bringen zu können, ist der in den Figuren 37 bis 44 dargestellte Durchflussmengenregler in einem, in die Fluidleitung zwischengeschalteten Wendeteil 14 gehalten, welches Wendeteil 14 zum Ändern der Durchströmrichtung im Durchflussmengenregler 50 bei ansonsten gleichbleibender Durchflussrichtung in den benachbarten Leitungsabschnitten der Fluidleitung drehbar in der Fluidleitung gelagert ist. Dieses Wendeteil 14 ist dazu in einem kugelhahn-artigen Leitungsadapter 15 drehbar gelagert, der in eine Fluidleitung einsetzbar ist.

Der Leitungsadapter 15, der auch als Kugelhahn verwendet werden und dessen Wendeteil 14 gleichzeitig auch als Ventilkugel dienen kann, ist über einen Hebel von außen betätigbar.

In den Figuren 40 und 44 sind die Durchflusskurven dargestellt, die sich einstellen, wenn der Durchflussmengenregler 50 in der in den Figuren 37 bis 39 gezeigten Funktionsstellung einerseits unter der in den Figuren 41 bis 43 dargestellten Funktionsstellung (vgl. Fig. 44) betrieben wird.

Es versteht sich, dass durch eine Veränderung der Durchflussrichtung in den hier dargestellten Durchflussmengenreglern gleichzeitig auch eine Spülströmung erzeugt wird, welche die eventuell stirnseitig am Durchflussmengenregler angeschwemmten Schmutzpartikel mitreißt und aus dem Bereich des Durchflussmengenreglers wieder entfernt.

## Patentansprüche

1. Durchflussmengenregler (10, 20, 30, 40, 50) mit einem Reglergehäuse (1), das (1) in einem Durchtrittskanal (2) einen Zentralkörper (3) aufweist, den ein ringförmiger Drosselkörper (4) aus elastischem Material umgreift, welcher Drosselkörper (4) zwischen sich und einem benachbarten, mit in Umfangsrichtung voneinander beabstandeten und in Durchflussrichtung (Pf1, Pf2) orientierten Regulierausnehmungen (7, 7') versehene Umfangsmantelfläche (5) einen Steuerspalt (6) begrenzt, dessen Durchtrittsquerschnitt durch den sich unter der beim Durchströmen bildenden Druckdifferenz verformenden Drosselkörper (4) veränderbar ist, **dadurch gekennzeichnet, dass** der lichte Durchflussquerschnitt des Steuerspalts (6) durch eine Änderung der Relativposition von Drosselkörper (4) und Umfangsmantelfläche veränderbar ist, dass die Relativposition von Drosselkörper (4) und Umfangsmantelfläche (5) in Abhängigkeit von der Durchflussrichtung (Pf1, Pf2) des durch den Durchtrittskanal (2) durchströmenden Fluids festlegbar ist, und dass der Zentralkörper (3) als ein die Regulierausnehmungen (7, 7') aufweisender Steuerzapfen, Steuerkegel oder dergleichen Steuerkörper ausgestaltet ist, der zumindest zwei Teil-Abschnitte mit voneinander abweichenden Kegel-, Zapfen- oder dergleichen Steuerkörper-Querschnitten und/oder Regulierausnehmungen (7, 7') zur Änderung zwischen wenigstens zwei Durchflussleistungen und/oder mindestens zwei Druckbereichen aufweist.

2. Durchflussmengenregler nach Anspruch 1, **dadurch gekennzeichnet, dass** der Drosselkörper (4) und/oder der Zentralkörper (3) im Reglergehäuse (1) bewegbar ist.

3. Durchflussmengenregler nach Anspruch 1 oder 2, **dadurch gekennzeichnet, dass** der Drosselkörper (4) und/oder der Zentralkörper (3) in Abhängigkeit von der Durchflussrichtung zwischen zwei Drossel- bzw. Zentralkörper-Anschlägen (8, 9) bewegbar ist.

4. Durchflussmengenregler nach einem der Ansprüche 1 bis 3, **dadurch gekennzeichnet, dass** im Gehäuseinneren des Reglergehäuses (1) ein Führungszapfen (12) vorgesehen ist, auf dem der Zentralkörper (3) mittels einer Führungsöffnung (11) verschieblich geführt ist.

5. Durchflussmengenregler nach einem der Ansprüche 1 bis 4, **dadurch gekennzeichnet, dass** der Zentralkörper (3) als ein sich vorzugsweise gleichmäßig verjüngender Steuerkegel ausgestaltet ist.

6. Durchflussmengenregler nach einem der Ansprüche 1 bis 5, **dadurch gekennzeichnet, dass** der Drosselkörper (4) am Gehäuseinnenumfang des Reglergehäuses (1) in einer Nut (13) oder dergleichen Drosselkörper-Aufnahme in Durchflussrichtung im wesentlichen unverrückbar gehalten ist.

7. Durchflussmengenregler nach einem der Ansprüche 1 bis 6, **dadurch gekennzeichnet, dass** der Durchflussmengenregler (50) in einem, in die Fluidleitung zwischengeschalteten Wendeteil (14) vorgesehen ist und dass das Wendeteil (14) zum Ändern der Durchströmrichtung im Durchflussmengenregler (50) bei ansonsten gleichbleibender Durchflussrichtung in den benachbarten Leitungsabschnitten der Fluidleitung drehbar in der Fluidleitung gelagert ist.

## Claims

1. Throughflow regulator (10, 20, 30, 40, 50) having a regulator housing (1), said housing (1) having, in a throughflow channel (2), a central body (3) which is surrounded by an annular throttle member (4) of elastic material, said throttle member (4) defining between itself and an adjacent outer circumferential surface (5), which is provided with regulating recesses (7, 7') circumferentially spaced from one another and oriented in the direction of throughflow (Pf1, Pf2), a control slot (6), the cross-section of passage of which can be altered by means of the throttle member (4) which deforms under the pressure difference produced during throughflow, **characterised in that** the internal cross-section of flow of the control slot (6) can be varied by altering the relative position of the throttle member (4) and the outer circumferential surface, **in that** the relative position of the throttle member (4) and outer circumferential surface (5) can be fixed, as a function of the direction of throughflow (Pf 1, Pf2) of the fluid flowing through the throughflow channel (2), and **in that** the central body (3) is in the form of a control pin, control cone or similar control member comprising the regulating recesses (7, 7'), which has at least two partial sections with different cross-sections of the cone, pin or similar control member, and/or regulating recesses (7, 7') for changing between at least two throughflow rates and/or at least two pressure ranges.

2. Throughflow regulator according to claim 1, **characterised in that** the throttle member (4) and/or the central member (3) is or are movable in the regulator housing (1).

3. Throughflow regulator according to claim 1 or 2, **characterised in that** the throttle member (4) and/or the central member (3) is or are movable between two throttle or central member abutments (8, 9) as a function of the direction of throughflow.

4. Throughflow regulator according to one of claims 1 to 3, **characterised in that** inside the regulator housing (1) is provided a guide pin (12) on which the central member (3) is movably guided by means of a guide opening (11).

5. Throughflow regulator according to on of claims 1 to 4, **characterised in that** the central member (3) is constructed as a preferably evenly tapering control cone.

6. Throughflow regulator according to one of claims 1 to 5, **characterised in that** the throttle member (4) is held so as to be substantially immovable in the direction of throughflow on the inner circumference of the regulator housing (1) in a groove (13) or similar throttle member receiving means.

7. Throughflow regulator according to one of claims 1 to 6, **characterised in that** the throughflow regulator (50) is provided in a turning part (14) interposed in the fluid line and **in that** the turning part (14) is rotatably mounted in the fluid line for varying the direction of throughflow in the throughflow regulator (50) while the direction of throughflow otherwise remains constant in the adjacent sections of the fluid line.

## Revendications

1. Régulateur de débit (10, 20, 30, 40, 50) comprenant un boîtier de régulateur (1), lequel (1) présente dans un canal de passage (2) un corps central (3), qui entoure un corps d'étranglement (4) de forme annulaire à base de matériau élastique, lequel corps d'étranglement (4) délimite entre lui et une surface d'enveloppe périphérique (5) voisine, dotée d'évidements de régulation (7, 7') espacés les uns des autres dans le sens périphérique et orientés dans le sens d'écoulement (Pf1, Pf2), une fente de commande (6) dont la section de passage peut être modifiée par le corps d'étranglement (4) se déformant avec une différence de pression se formant lors de l'écoulement, **caractérisé en ce que** la section de passage intérieure de la fente de commande (6) peut être modifiée par une modification de la position relative du corps d'étranglement (4) et de la surface d'enveloppe périphérique, **en ce que** la position relative du corps d'étranglement (4) et de la surface d'enveloppe périphérique (5) peut être définie en fonction du sens d'écoulement (Pf1, Pf2) du flux s'écoulant à travers le canal de passage (2), et **en ce que** le corps central (3) est conçu comme un pivot de commande présentant les évidements de régulation (7, 7'), un cône de commande ou un corps de commande similaire, lequel présente au moins deux tronçons partiels avec des sections de cône, de pivot différentes les unes des autres ou des sections de corps de commande similaires et/ou d'évidements de régulation (7, 7') pour la variation entre au moins deux débits et/ou au moins deux zones de pression.

2. Régulateur de débit selon la revendication 1, **caractérisé en ce que** le corps d'étranglement (4) et/ou le corps central (3) peut être déplacé dans le boîtier de régulateur (1).

3. Régulateur de débit selon la revendication 1 ou 2, **caractérisé en ce que** le corps d'étranglement (4) et /ou le corps central (3) peut/peuvent être déplacé(s) en fonction du sens d'écoulement entre deux butées d'étranglement ou de corps central (8, 9).

4. Régulateur de débit selon l'une quelconque des revendications 1 à 3, **caractérisé en ce que** à l'intérieur du boîtier de régulateur (1) est prévu un pivot de guidage (12) sur lequel le corps central (3) est guidé de façon coulissante au moyen d'une ouverture de guidage (11).

5. Régulateur de débit selon l'une quelconque des revendications 1 à 4, **caractérisé en ce que** le corps central (3) est conçu comme un cône de commande se rétrécissant de préférence de façon régulière.

6. Régulateur de débit selon l'une quelconque des revendications 1 à 5, **caractérisé en ce que** le corps d'étranglement (4) est maintenu de façon sensiblement immobile sur le pourtour intérieur du boîtier de régulateur (1) dans une rainure (13) ou un logement de corps d'étranglement similaire dans le sens d'écoulement.

7. Régulateur de débit selon l'une quelconque des revendications 1 à 6, **caractérisé en ce que** le régulateur de débit (50) est prévu dans une partie réversible (14) intercalée dans la conduite à fluide et **en ce que** la partie réversible (14) pour la modification du sens d'écoulement dans le régulateur de débit (50) est logée de façon rotative dans la conduite à fluide avec un sens d'écoulement par ailleurs uniforme dans les parties de conduite voisines de la conduite à fluide.
